# EUROPÄISCHE PATENTSCHRIFT

(11) **EP 1 161 138 B1**
(45) Veröffentlichungstag und Bekanntmachung des Hinweises auf die Patenterteilung: **19.01.2005**
(21) Anmeldenummer: 00912565.9
(22) Anmeldetag: 08.03.2000
(51) Int. Cl.: A01K 9/00

(54) **VORRICHTUNG ZUM KONTROLLIEREN DES ZUSTANDES VON SÄUGETIEREN**
DEVICE FOR VERIFYING THE STATE OF MAMMALS
DISPOSITIF POUR CONTROLER L'ETAT DE MAMMIFERES

(30) Priorität: 17.03.1999 DE 19912026; 27.10.1999 DE 19951690; 17.12.1999 DE 19960943
(43) Veröffentlichungstag der Anmeldung: 12.12.2001
(60) Teilanmeldung: 03027252.0
(73) Patentinhaber: Förster, Martin, 78234 Engen (DE)
(72) Erfinder: Förster, Martin, 78234 Engen (DE)
(74) Vertreter: Weiss, Peter, Dr.
(86) Internationale Anmeldenummer: PCT/EP2000/002000
(87) Internationale Veröffentlichungsnummer: WO 2000/054576

(56) Entgegenhaltungen:
- WO-A-91/17652
- WO-A-97/15185
- DE-A- 3 420 074
- DE-A- 3 610 960
- DE-A- 19 710 342
- FR-A- 2 424 731
- US-A- 5 782 561
- DATABASE WPI Section PQ, Week 9713 Derwent Publications Ltd., London, GB; Class P34, AN 97-143814 XP002143128 & RU 2 063 778 A (KURSK AGRIC IND RES INST), 20. Juli 1996 (1996-07-20)

## Beschreibung

Die Erfindung betrifft eine Vorrichtung zum Kontrollieren des Zustandes, insbesondere des Gesundheitszustandes, von Säugetieren, insbesondere von landwirtschaftlichen Nutztieren, welche an einem Nuckel saugen, sowie ein Verfahren zum Kontrollieren des Zustandes von Säugetieren.

Beispielsweise bei der heutigen Kälberaufzucht ist es unumgänglich, dass laufend der Zustand der Zuchttiere ermittelt wird. Aus der DE 197 10 342.1 ist beispielsweise eine Vorrichtung und ein Verfahren für die automatische Erfassung der Körpertemperatur bei landwirtschaftlichen Nutztieren mit Alarmfunktion bekannt, wobei in dem Milchtränkenuckel ein Temperaturfühler integriert ist.

In der Praxis haben sich dabei jedoch verschiedene Schwierigkeiten herausgestellt. Zum einen werden die Temperatursensoren von den Tieren verbissen, weshalb sie sicher geschützt werden müssen, ohne dass die Messwerte bzw. die Messzeiten beeinträchtigt werden. In vielen Fällen nehmen die Tiere auch den Nuckel und damit den Temperatursensor nicht immer vollständig ins Maul, so dass auch hier die Messergebnisse verfälscht werden. Eine Verfälschung der Messergebnisse tritt auch durch das Tränkemedium selbst und durch mitgesaugte Luft ein. Wenn beispielsweise die Milch sehr warm ist, wird die Temperatur der Milch, jedoch nicht die Körpertemperatur des Tieres ermittelt.

In vielen Fällen sind auch die Zeiten für die zuverlässigen Messungen zu kurz.

Die WO-A-97 15 185 offenbart eine Vorrichtung zum Füttern von Tieren, bei welcher eine Zuleitung zu einem Nuckel in einer schwenkbaren Halterung geführt ist. In dieser Halterung ist eine Heizeinrichtung vorgesehen, welche die innere Zuleitung zum Nuckel erwärmen kann, damit keine Temperaturverluste des Nahrungsmittels auftreten und ggf. die Temperatur des austretenden Nahrungsmittels nachgeregelt werden kann.

Der vorliegenden Erfindung liegt die Aufgabe zugrunde, eine Vorrichtung der o.g. Art zu entwickeln, mittels welcher ein Gesamtzustand des nuckelnden Säugetieres ermittelt werden kann.

Zur Lösung dieser Aufgabe führen die Merkmale des Patentanspruches 1 sowie die des nebengeordneten Patentanspruches 17.

Beim Kontrollieren des Zustandes eines Säugetieres erscheint es grundsätzlich wichtig, dass der Nuckel in seiner Temperatur nicht zu weit von der Körpertemperatur des Säugetieres abweicht. Bei einer zu hohen Abweichung könnten sonst Messergebnisse durch einen gewissen Temperaturschock verfälscht werden. Aus diesem Grunde ist nach der vorliegenden Erfindung vorgesehen, dass der Nuckel zumindest teilweise erwärmt wird.

Ein weiterer Teil der vorliegenden Erfindung bezieht sich auf die Ermittlung der Körpertemperatur des nuckelnden Säugetieres. Aus der Körpertemperatur kann auf den Zustand des Säugetieres geschlossen werden, insbesondere ob es Fieber hat, Stresssituationen ausgesetzt ist od. dgl..

Aus der DE-197 10 342.1 A1 ist bereits bekannt, dem Nuckel Temperatursensoren zuzuordnen. Im bevorzugten Ausführungsbeispiel sind in dem Nuckel sowohl eine Einrichtung zum Erwärmen des Nuckels, als auch zumindest ein Temperatursensor integriert. Durch beide Einrichtungen wird die Temperatur des Nuckels bevorzugt auf eine Temperatur gebracht, die knapp unterhalb der Körpertemperatur des Säugetieres liegt. Liegt beispielsweise die Körpertemperatur bei 40°C, so sollte die Nuckeltemperatur bei etwa 38,5° C liegen. Damit wird vermieden, dass der Nuckel überhaupt erst beim Trinken des Säugetieres auf dessen Temperatur erwärmt wird, was einige Zeit in Anspruch nimmt. Durch das vorliegende erfindungsgemässe Verfahren kann der Temperatursensor besser und genauer auf auch geringere Temperaturunterschiede reagieren.

In einem bevorzugten Ausführungsbeispiel soll auch das Nährmittel, insbesondere die Milch, im Bereich des Nuckels nachgewärmt werden. Dies kann in dem Tränkeautomaten, vor der Saugstelle oder in der Saugstelle selbst erfolgen. Wünschenswert wäre es, die Milchtemperatur ebenfalls auf eine Temperatur knapp unter der Körpertemperatur des Säugetieres einzustellen, da dadurch dann keine Schwankungen im bzw. am Nuckel auftreten, die nicht auf die Körpertemperatur des Säugetieres zurückzuführen sind.

In einem weiteren Ausführungsbespiel können die Temperatursensoren entfernter von dem eigentlichen Nuckelteil angeordnet werden, damit die Ermittlung der Temperatur nicht durch die Temperatur des Tränkemediums verfälscht wird. Hierzu bietet es sich an, den Nuckel mit einem verbreiterten Basisteil zu versehen, wobei das Basisteil aus hochfestem Material ausgestaltet ist. Durch dieses verbreiterte Basisteil wird verhindert, dass Luft mit angesaugt wird.

Die Ausgestaltung des Nuckels aus bevorzugt zwei Teilen, nämliche dem verbreiterten Basisteil und einem eigentlichen in dem verbreiterten Basisteil steckenden Nuckelteil erlaubt es, dass das eigentliche Nuckelteil, welches weicher ausgestaltet ist, als das Basisteil, auswechselbar ausgebildet werden kann. Hierdurch können Kosten eingespart werden.

Damit die Tiere den Nuckel vorzugsweise komplette ins Maul nehmen und die Umgebungsluft die Temperatursensoren nicht zu stark abkühlt, wird bevorzugt auch das Basisteil vorgeheizt. Dabei liegt die Vorheiztemperatur auch hier knapp unter der Körpertemperatur, so dass beim Saugen die Körpertemperatur des Tieres schneller und sicherer an den Temperatursensoren erreicht wird. Hierdurch werden die Messzeiten verkürzt und es werden mehr verwendbare Messungen erzielt.

Wenn das Tier den Nuckel ganz in das Maul nimmt, leitet die Nuckelspitze das Tränkemedium auch gleich in den Schlund, so dass die Temperatur der Tränke die Messergebnisse nicht beeinträchtigt. Ferner ist daran gedacht, bei den Messvorgängen die Tränkezufuhr zu unterbrechen oder zu drosseln. Zudem kann die Tränkezufuhr in Abhängigkeit einer Nahrungsmitteltemperatur und/oder zur Verlängerung einer Messzeit gedrosselt werden. Auch soll im Rahmen der vorliegenden Erfindung liegen, dass bei einer höheren Abweichung der Nuckeltemperatur von der Körpertemperatur des Säugetieres über einen Schwellenwert hinaus die Nuckeltemperatur auf eine geringere Temperaturdifferenz zur gemessenen Körpertemperatur des Tieres nachgefahren wird.

Bevorzugt sollen übrigens mehrere Sensoren an verschiedenen Stellen des Nuckels vorgesehen sein. Damit werden Fehlmessungen in Verbindung mit entsprechender Datenauswertung durch angesaugte Tränke und/oder Luft vermieden.

Es hat sich ferner als vorteilhaft bei der vorliegenden Erfindung erwiesen die Sensoren, Heizeinrichtungen, Temperatursensoren od. dgl. erst nach oder während der Nahrungsmittelaufnahme des Tieres am Nuckel diesen einzuschieben, damit das Tier durch die entsprechenden eingeschobenen Bauteile nicht vom Nuckeln abgelenkt wird. Dadurch dass das Tier an einem gewöhnlichen Nuckel mit der Nahrungsaufnahme beginnt, bis das Nahrungsmittel vom Tier im Maul aufgenommen wird, ist es durch das Saufen abgelenkt. Erst dann werden bspw. automatisch die Sensoren, Temperatursenoren, Heizelemente od. dgl. in bzw. neben den Nuckel eingeschoben, um die entsprechenden Werte zu ermitteln.

Als Heizelemente können bspw. elektrische, insbesondere elastische Elemente verwendet werden. Es hat sich jedoch auch als vorteilhaft erwiesen, flexible Schläuche od. dgl. mit einem erwärmten Medium, bspw. Wasser in den Nuckel einzusetzen um diesen, oder insbesondere ein Bereich des Temperatursensors zu erwärmen.

Dabei können auch bspw. Heizkanäle, Kammern od. dgl. in die Wandung des Nuckels eingegossen werden, die bspw. mit einem erwärmten Medium durchströmt werden. Ferner soll auch daran gedacht sein, den Nuckel von aussen, insbesondere von extern mit Wärme zu beaufschlagen, wie bspw. mittels Wärmestrahlern, Warmluft od. dgl.. Dies soll ebenfalls im Rahmen der vorliegenden Erfindung liegen.

Die vorliegende Erfindung eignet sich besonders bei Saugstellen an Tränkeautomaten und beliebigen Tränkevorrichtungen, an Wassertränken für kaltes und warmes Wasser und Flüsskeiten mit beliebigen Zusätzen, aber auch als Vorrichtung zum Spielen und zum Abreagieren des Saugbedürfnisses.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a einen Längsschnitt durch einen erfindungsgemässen Nuckel;
Figur 1b einen Längsschnitt durch den Nuckel gemäss Figur 1a mit einer Trennwand;
Figur 1c einen Längsschnitt durch den Nuckel gemäss den Figuren 1a und 1b mit eingesetztem Hülsenelement als Sensor;
Figur 1d einen Querschnitt durch den Nuckel gemäss Figur 1c entlang Linie Id-Id;
Figur 1e einen Teillängsschnitt durch einen Sensor im Bereich einer Wandung des Nuckels;
Figur 2 eine Seitenansicht einer erfindungsgemässen Vorrichtung zum Kontrollieren des Zustandes von Säugetieren;
Figur 3 eine Draufsicht auf die Vorrichtung gemäss Figur 2.

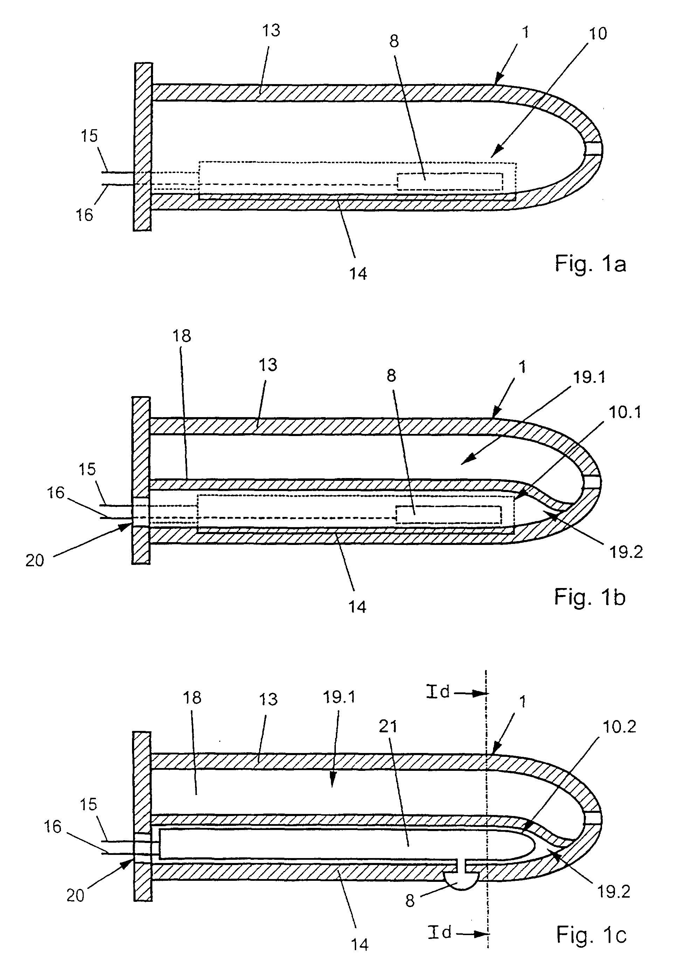

In Figur 1a ist ein handelsüblicher Nuckel 1 dargestellt. In einer Wandung 13 des Nuckels 1 befindet sich ein Heizelement 14, welches, gestrichelt dargestellt, schalenförmig ausgebildet ist. Ferner ist in der Wandung 13 des Nuckels 1 ein Temperatursensor 8 vorgesehen.

Über das Heizelement 14 wird der Nuckel 1 auf eine Temperatur vorgewärmt, die bevorzugt knapp unter der Körpertemperatur des Säugetieres liegt. Über den Temperatursensor 8 wird die Temperatur des Nuckels 1 vor, während und nach dem Saugen des Säugetieres ermittelt, wobei aus den Temperaturdifferenzen auf den Zustand des Säugetieres geschlossen werden kann.

Das Heizelement 14 steht über eine Leitung 15 mit einer entsprechenden Energiequelle in Verbindung. Der Temperatursensor 8 weist einen Anschluss 16 an eine entsprechende Einheit auf, welche die Werte des Temperatursensors 8 übernimmt.

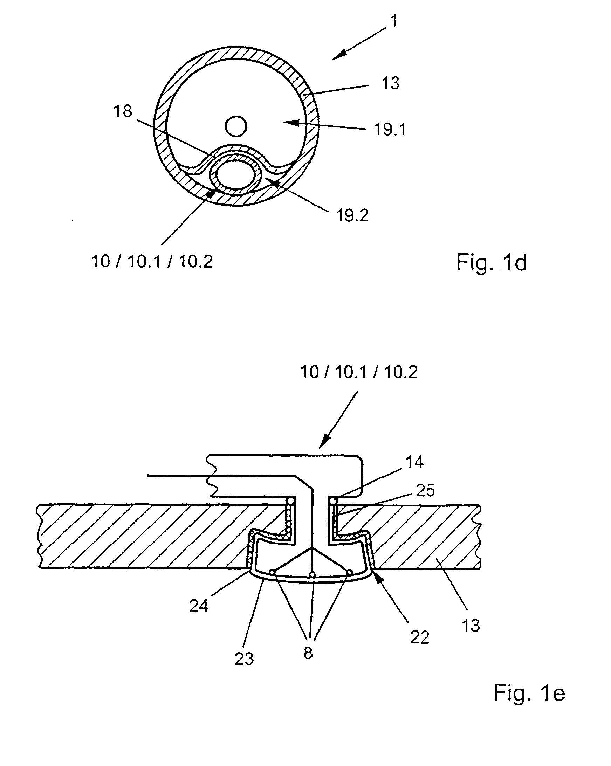

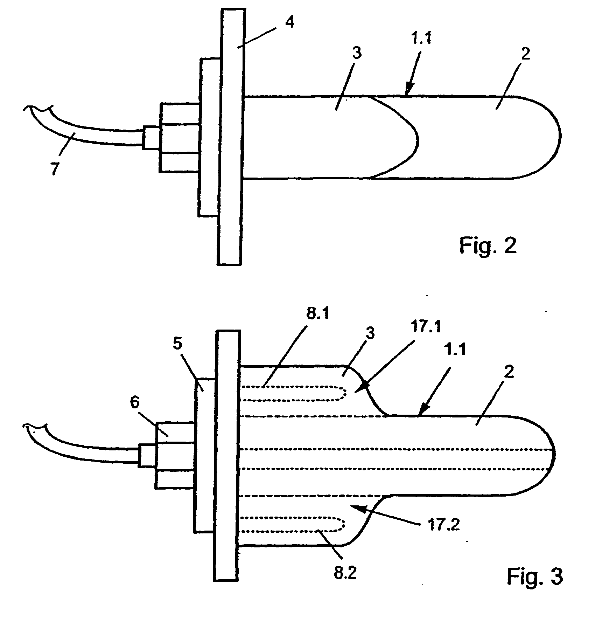

Eine erfindungsgemässe Vorrichtung zum Kontrollieren des Zustandes von Säugetieren gemäss Figur 2 und 3 weist einen Nuckel 1.1 auf, der aus einem Nuckelteil 2 und einem Basisteil 3 besteht. Das Basisteil 3 ist flach ausgebildet und gegenüber dem Nuckelteil 2 verbreitert. Es kann seitliche Kanäle 17.1, 17.2 aufweisen, in welche die entsprechenden Temperatursensoren 8.1, 8.2 aber auch Sensoren 10.1, 10.2 (siehe Figuren 1b, 1c und 1e) einsetzbar sind.

Der Nuckel 1.1 ist bevorzugt in eine Halteplatte 4 eingesetzt und wird an dieser über eine rückwärtige Scheibe 5 sowie eine Mutter 6 gehalten. Mit 7 ist eine Zuleitung für beispielsweise Milch angedeutet.

Gemäss Figur 1b ist der Nuckel 1 mittels einer Trennwand 18 in eine erste Kammer 19.1 und eine zweite Kammer 19.2 unterteilt. Durch die erste Kammer 19.1 strömt das Nahrungsmittel, durch die zweite Kammer 19.2 ist durch die endseitige Öffnung 20 ein Sensor 10.1, ggf. mit Temperatursensor 8 einsetzbar und damit wieder austauschbar.

Durch die Trennwand 18 sind die Kammern 19.1, 19.2 vollständig voneinander getrennt, so dass kein Nahrungsmittel in den Bereich des Sensors 10.1 einströmen kann. Dieser wird vor Nahrungsmitteln geschützt.

Um Verkäsungen, Rückstände in der Kammer 19.1 zu verhindern, ist die Trennwand 18, wie es auch in der querschnittlichen Darstellung in Figur 1d aufgezeigt ist, strömungsbegünstigt in den Randbereichen stirnseitig ausgebildet, so dass keine Rückstände in der Kammer 19.1 an Nahrungsmittel oder an Nahrungsmittelresten verbleiben.

Es hat sich als besonders vorteilhaft erwiesen in die Kammer 19.2 den Sensor 10.1 wiederlösbar ggf. austauschbar einzusetzen, so dass bei Beschädigung des Nuckels 1 und/oder des Sensors 10, 10.1, 10.2 diese Bauteile ausgetauscht werden können und nicht vollständig ersetzt werden müssen. Dabei kann dem Sensor 10.1 ebenfalls in oben beschriebener Weise ein Heizelement 14 zugeordnet sein.

In einem weiteren Ausführungsbeispiel der vorliegenden Erfindung gemäss Figur 1c ist der Sensor 10.2 hülsenartig, als Hülsenelement 21 ausgebildet, welches ggf. mittels Heizelementen 14 beheizbar ist. Dieses Hülsenelement 21 ist in oben beschriebener Weise durch die Öffnung in den Nuckel 1, insbesondere in seine Kammer 19.2 einsetzbar.

Eine Besonderheit des Hülsenelementes 21 ist, wie es insbesondere in Figur 1e aufgezeigt ist, dass ein Vorsprung 24 durch eine Aufnahmeöffnung 22 der Wandung 13 des Nuckels 1 durchgreift, damit eine vorzugsweise gut leitende Oberfläche 23 aus dem Nuckel 1 herausragt.

Diese dient zum exakten Messen und Erfassen der Temperatur des Tiers bei der Nahrungsmittelaufnahme. Dabei kann der Vorsprung 24 eine Mehrzahl von Temperatursensoren 8, verteilt auf der Oberfläche 23 aufweisen, um eine Temperaturänderung und insbesondere auch die Temperatur des Tieres am Nuckel 1 exakt und schnell zu erfassen.

Auch kann dem Sensor 10.1, 10.2, insbesondere dem Vorsprung 24 das Heizelement 14 zugeordnet sein, um die Temperatur annähernd auf die Temperatur des Tieres vorzuheizen, so dass die Temperaturerfassung schneller und exakter erfolgen kann.

Damit keine Temperaturverluste auftreten können, kann der Vorsprung 24 in der Wandung 13 mit einer Isolierung 25 versehen sein.

Es hat sich auch als vorteilhaft erwiesen, die Oberfläche 23 des Vorsprunges 24 linsenartig gewölbt auszubilden, so dass eine Verletzungsgefahr minimiert ist und dennoch ein gutes Kontaktieren und Berühren, insbesondere eine gute Temperaturübertragung gewährleistet ist. Ferner ist von Vorteil bei der vorliegenden Erfindung, dass der Vorsprung 24 knopfartig erweitert aus gebildet ist, welcher in eine entsprechende mit einem Absatz versehene Aufnahmeöffnung 22 passgenau eingreift und auf diese Weise den Sensor 10, 10.1, 10.2 gegenüber der Wandung 13 hält.

Gleichzeitig wird, wie es in den Figuren 1b und 1c dargestellt ist, durch die Trennwand 18 der Sensor 10, 10.1, 10.2 in der Kammer 19.2 fest eingespannt und gehalten.

Durch den Vorsprung 24 wird zusätzlich der Sensor 10, 10.1, 10.2 zentriert gehalten und ist zusätzlich vor herausrutschen aus dem Nuckel 1, insbesondere der Wandung 13 gesichert.

Im Rahmen der vorliegenden Erfindung soll auch liegen, eine Mehrzahl von derartigen Vorsprüngen 24, verteilt auf die Oberfläche 23, insbesondere die Wandung 13 des Nuckels 1 vorzusehen, um eine Temperaturmessung oder Änderung schnell zu erfassen.

Gemäss Figur 3 befinden sich in dem verbreiterten Basisteil 3 Temperatursensoren 8.1 und 8.2, die nur gestrichelt angedeutet sind.

Nicht erkennbar ist im vorliegenden Ausführungsbeispiel, dass das Nuckelteil 2 und das Basisteil 3 zwei getrennte Elemente sein können, wobei das Nuckelteil 2 austauschbar ist.

| **Positionszahlenliste** | | | | | |
|---|---|---|---|---|---|
| 1 | Nuckel | 34 | | 67 | |
| 2 | Nuckelteil | 35 | | 68 | |
| 3 | Basisteil | 36 | | 69 | |
| 4 | Halteplatte | 37 | | 70 | |
| 5 | Scheibe | 38 | | 71 | |
| 6 | Mutter | 39 | | 72 | |
| 7 | Zuleitung | 40 | | 73 | |
| 8 | Temperatursensor | 41 | | 74 | |
| 9 | | 42 | | 75 | |
| 10 | Sensor | 43 | | 76 | |
| 11 | | 44 | | 77 | |
| 12 | | 45 | | 78 | |
| 13 | Wandung | 46 | | 79 | |
| 14 | Heizelement | 47 | | | |
| 15 | Leitung | 48 | | | |
| 16 | Anschluss | 49 | | | |
| 17 | Kanal | 50 | | | |
| 18 | Trennwand | 51 | | | |
| 19 | Kammern | 52 | | | |
| 20 | Öffnung | 53 | | | |
| 21 | Hülsenelement | 54 | | | |
| 22 | Aufnahmeöffnung | 55 | | | |
| 23 | Oberfläche | 56 | | | |
| 24 | Vorsprung | 57 | | | |
| 25 | Isolierung | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Kontrollieren des Zustandes, insbesondere des Gesundheitszustandes, von Säugetieren, insbesondere von landwirtschaftlichen Nutztieren, welche an einem Nuckel (1) saugen,
**dadurch gekennzeichnet,**
**dass** dem Nuckel (1) eine Einrichtung (14) zum Erwärmen zugeordnet ist, wobei in diesem sich zumindest ein Heizelement (14) nahe im Bereich zumindest eines Temperatursensors (8) befindet und dieser erwärmbar ist.

2. Vorrichtung nach Anspruch 1, **dadurch gekennzeichnet, dass** dem Nuckel (1) der zumindest eine Temperatursensor (8, 8.1, 8.2) zugeordnet ist.

3. Vorrichtung nach Anspruch 2, **dadurch gekennzeichnet, dass** dem Nuckel (1) und/oder dem Sensor (10.1, 10.2), insbesondere dem Temperatursensor (8, 8.1, 8.2) zumindest eine Einrichtung (14) zum Erwärmen zugeordnet ist.

4. Vorrichtung nach wenigstens einem der Ansprüche 1 bis 3, **dadurch gekennzeichnet, dass** sich der Temperatursensor (8, 8.1, 8.2) neben oder unter dem eigentlichen Nuckelteil (2) befindet.

5. Vorrichtung nach wenigstens einem der Ansprüche 1 bis 4, **dadurch gekennzeichnet, dass** der Nuckel (1) ein verbreitertes Basisteil (3) aufweist, in dem zumindest ein Temperatursensor (8.1, 8.2) in ggf. einem zumindest teilweise geschlossenen Kanal (17.1, 17.2) angeordnet ist.

6. Vorrichtung nach wenigstens einem der Ansprüche 1 bis 5, **dadurch gekennzeichnet, dass** das Heizelement (14) als elektrisches Element ggf. als elastisch ausgebildetes Schlauchelement oder Kammerelement ausgebildet und mittels eines erwärmten Mediums durchströmbar ist.

7. Vorrichtung nach wenigstens einem der Ansprüche 1 bis 6, **dadurch gekennzeichnet, dass** der Nuckel (1) aus einem Nuckelteil (2) und einem Basisteil (3) besteht.

8. Vorrichtung nach Anspruch 7, **dadurch gekennzeichnet, dass** das Nuckelteil (2) auswechselbar ist.

9. Vorrichtung nach wenigstens einem der Ansprüche 1 bis 8, **dadurch gekennzeichnet, dass** der Nuckel (1) über zumindest eine Trennwand (18) in zwei Kammern (19.1, 19.2) unterteilt ist.

10. Vorrichtung nach Anspruch 9, **dadurch gekennzeichnet, dass** durch die Kammer (19.1) das Nahrungsmittel hindurch strömt, und in die Kammer (19.2) der Sensor (10.1, 10.2) über eine endseits vorgesehene Öffnung (20) einsetzbar, insbesondere austauschbar ist, wobei der Sensor (10.1, 10.2) innerhalb der Kammer (19.2) durch die Trennwand (18) gehalten ist.

11. Vorrichtung nach Anspruch 9 oder 10, **dadurch gekennzeichnet, dass** die Kammer (19.1) von der Kammer (19.2) unterteilt und die Trennwand (18) strömungsbegünstigt, insbesondere stirnseitig und in seitlichen Bereichen ausgebildet ist.

12. Vorrichtung nach wenigstens einem der Ansprüche 1 bis 11, **dadurch gekennzeichnet, dass** der Sensor (10.2) als Hülsenelement (21) in die Kammer (19.2) wiederlösbar einsetzbar ist.

13. Vorrichtung nach wenigstens einem der Ansprüche 1 bis 12, **dadurch gekennzeichnet, dass** zumindest ein Teil des Sensors (10, 10.1, 10.2) knopfartig in eine Aufnahmeöffnung (22) einer Wandung (13) des Nuckels (1) eingesetzt und ggf. dort gehalten ist, wobei eine hochleitfähige Oberfläche (23) zur Temperaturerfassung dient.

14. Vorrichtung nach Anspruch 13, **dadurch gekennzeichnet, dass** der Sensor (10, 10.1, 10.2) ggf. mit einem Vorsprung (24) versehen ist, welcher passgenau in die Aufnahmeöffnung (22) der Wandung (13) vollständig oder teilweise in einer Ausnehmung der Wandung (13) eingreift und zumindest einen Temperatursensor (8) nahe der Oberfläche (23) aufweist.

15. Vorrichtung nach Anspruch 14, **dadurch gekennzeichnet, dass** die Aufnahmeöffnung (22) absatzartig zur Aufnahme des entsprechend ausgebildeten Vorsprunges (24) ausgebildet ist, wobei dem Vorsprung (24) zumindest ein Heizelement (14) zugeordnet ist.

16. Vorrichtung nach Anspruch 14 oder 15, **dadurch gekennzeichnet, dass** der Vorsprung (24) zumindest teilweise mit einer Isolierung (25) im Bereich der Wandung (13) vorgesehen ist.

17. Verfahren zum Kontrollieren des Zustandes, insbesondere des Gesundheitszustandes, von Säugetieren, insbesondere von landwirtschaftlichen Nutztieren, welche an einem Nuckel (1) saugen, **dadurch gekennzeichnet, dass** zumindest ein in den Nuckel (1) eingesetzter Temperatursensor (8.1, 8.2) oder dessen Umgebung zumindest teilweise erwärmt wird.

18. Verfahren nach Anspruch 17, **dadurch gekennzeichnet, dass** die Temperatur des Nuckels (1) ermittelt wird.

19. Verfahren nach Anspruch 17 oder 18, **dadurch gekennzeichnet, dass** die Nuckeltemperatur durch Erwärmen nahe der Körpertemperatur des Säugetieres gehalten oder geregelt wird.

20. Verfahren nach Anspruch 19, **dadurch gekennzeichnet, dass** bei einer höheren Abweichung der Nuckeltemperatur von der Körpertemperatur des Säugetieres über einen Schwellenwert hinaus die Nuckeltemperatur auf eine geringere Temperaturdifferenz zur gemessenen Körpertemperatur des Tieres nachgefahren wird.

## Claims

1. Apparatus for monitoring the state, more especially the state of health, of mammals, more especially of agricultural working animals, which suckle on a teat (1), **characterised in that** a means (14) for heating purposes is associated with the teat (1), at least one heating element (14) being situated in said teat close to the region of at least one temperature sensor (8), and said sensor being heatable.

2. Apparatus according to claim 1, **characterised in that** the at least one temperature sensor (8, 8.1, 8.2) is associated with the teat (1).

3. Apparatus according to claim 2, **characterised in that** at least one means (14) for heating purposes is associated with the teat (1) and/or the sensor (10.1, 10.2), more especially the temperature sensor (8, 8.1, 8.2).

4. Apparatus according to at least one of claims 1 to 3, **characterised in that** the temperature sensor (8, 8.1, 8.2) is situated adjacent to or beneath the actual teat portion (2).

5. Apparatus according to at least one of claims 1 to 4, **characterised in that** the teat (1) has a widened bottom portion (3), in which at least one temperature sensor (8.1, 8.2) is disposed, possibly in a channel (17.1, 17.2) which is at least partially closed.

6. Apparatus according to at least one of claims 1 to 5, **characterised in that** the heating element (14) is in the form of an electrical element, possibly in the form of a resiliently configured tubular element or chamber element, and it is traversable by means of a heated medium.

7. Apparatus according to at least one of claims 1 to 6, **characterised in that** the teat (1) comprises a teat portion (2) and a bottom portion (3).

8. Apparatus according to claim 7, **characterised in that** the teat portion (2) is interchangeable.

9. Apparatus according to at least one of claims 1 to 8, **characterised in that** the teat (1) is divided into two chambers (19.1, 19.2) via at least one dividing wall (18).

10. Apparatus according to claim 9, **characterised in that** the nutriment flows through the chamber (19.1) and the sensor (10.1, 10.2) is insertable into the chamber (19.2) via an opening (20) provided at one end, and is more especially replaceable, the sensor (10.1, 10.2) being retained within the chamber (19.2) by the dividing wall (18).

11. Apparatus according to claim 9 or 10, **characterised in that** the chamber (19.1) is separated from the chamber (19.2), and the dividing wall (18) is provided in a flow-enhancing manner, more especially at the end face and in lateral regions.

12. Apparatus according to at least one of claims 1 to 11, **characterised in that** the-sensor (10.2) is re-releasably insertable into the chamber (19.2) as a heating element (21).

13. Apparatus according to at least one of claims 1 to 12, **characterised in that** at least one portion of the sensor (10, 10.1, 10.2) is inserted in a buttonlike manner into a receiver aperture (22) of a wall (13) of the teat (1) and is possibly retained there, a highly conductive surface (23) serving to detect the temperature.

14. Apparatus according to claim 13, **characterised in that** the sensor (10, 10.1, 10.2) is possibly provided with a projection (24), which engages with an accurate fitting in the receiver aperture (22) of the wall (13), completely or partially in a recess of the wall (13), and has at least one temperature sensor (8) in the vicinity of the surface (23).

15. Apparatus according to claim 14, **characterised in that** the receiver aperture (22) has a shoulderlike configuration for accommodating the correspondingly configured projection (24), at least one heating element (14) being associated with the projection (24).

16. Apparatus according to claim 14 or 15, **characterised in that** the projection (24) is provided at least partially with an insulating material (25) in the region of the wall (13).

17. Method of monitoring the state, more especially the state of health, of mammals, more especially of agricultural working animals, which suckle on a teat (1), **characterised in that** at least one temperature sensor (8.1, 8.2), which is inserted into the teat (1) or the surrounding area thereof, is at least partially heated.

18. Method according to claim 17, **characterised in that** the temperature of the teat (1) is ascertained.

19. Method according to claim 17 or 18, **characterised in that** the teat temperature is kept close to the body temperature of the mammal or regulated by heating.

20. Method according to claim 19, **characterised in that**, if there is a relatively large difference between the teat temperature and the body temperature of the mammal beyond a threshold value, the teat temperature is adjusted to a smaller temperature difference from the measured body temperature of the animal.

## Revendications

1. Dispositif pour contrôler l'état, en particulier l'état de santé, de mammifères, en particulier d'animaux de rente d'élevage qui sucent à une tétine (1),
**caractérisé par le fait**
**qu'**à la tétine est associé (1) un dispositif (14) destiné à l'échauffement, dans ce dernier se trouvant au moins un élément chauffant (14) près de l'endroit d'au moins un capteur de température (8) et que ce dernier peut être échauffé.

2. Dispositif selon la revendication 1, **caractérisé par le fait qu'**à la tétine (1) est associé l'au moins un capteur de température (8, 8.1, 8.2).

3. Dispositif selon la revendication 2, **caractérisé par le fait qu'**à la tétine (1) et/ou au capteur (10.1, 10.2), en particulier au capteur de température (8, 8.1, 8.2), est associé au moins un dispositif (14) destiné à l'échauffement.

4. Dispositif selon au moins l'une des revendications 1 à 3, **caractérisé par le fait que** le capteur de température (8, 8.1, 8.2) se trouve à côté ou sous l'élément de tétine (2) proprement-dit.

5. Dispositif selon au moins l'une des revendications 1 à 4, **caractérisé par le fait que** la tétine (1) présente une partie de base élargie (3) dans laquelle est disposé au moins un capteur de température (8.1, 8.2) dans éventuellement un canal (17.1, 17.2) au moins partiellement fermé.

6. Dispositif selon au moins l'une des revendications 1 à 5, **caractérisé par le fait que** l'élément chauffant (14) est réalisé sous forme d'élément électrique, éventuellement sous forme d'élément de flexible ou d'élément de chambre réalisé élastique et pouvant être traversé par un fluide échauffé.

7. Dispositif selon au moins l'une des revendications 1 à 6, **caractérisé par le fait que** la tétine (1) se compose d'une partie de tétine (2) et d'une partie de base (3).

8. Dispositif selon la revendication 7, **caractérisé par le fait que** la partie de tétine (2) est échangeable.

9. Dispositif selon au moins l'une des revendications 1 à 8, **caractérisé par le fait que** la tétine (1) est subdivisée, par l'intermédiaire d'au moins une cloison (18), en deux chambres (19.1, 19.2).

10. Dispositif selon la revendication 9, **caractérisé par le fait qu'**à travers la chambre (19.1) circule l'aliment et que dans la chambre (19.2) peut être placé, en particulier échangé, le capteur (10.1, 10.2), par l'intermédiaire d'une ouverture (20) prévue du côté de l'extrémité, le capteur (10.1, 10.2) étant maintenu dans la chambre (19.2) par la cloison (18).

11. Dispositif selon la revendication 9 ou 10, **caractérisé par le fait que** la chambre (19.1) est subdivisée de la chambre (19.2) et la cloison (18) est réalisée de manière favorisée quant à l'écoulement, en particulier du côté frontal et dans des zones latérales.

12. Dispositif selon au moins l'une des revendications 1 à 11, **caractérisé par le fait que** le capteur (10.2) peut être placé de manière amovible sous forme d'élément de manchon (21) dans la chambre (19.2).

13. Dispositif selon au moins l'une des revendications 1 à 12, **caractérisé par le fait qu'**au moins une partie du capteur (10, 10.1, 10.2) est placé en forme de bouton dans une ouverture de réception (22) d'une paroi (13) de la tétine (1) et y est éventuellement maintenue, une surface hautement conductrice (23) servant à détecter la température.

14. Dispositif selon la revendication 13, **caractérisé par le fait que** le capteur (10, 10.1, 10.2) est éventuellement muni d'une saillie (24) qui s'engage en liaison de forme dans l'ouverture de réception (22) de la paroi (13), entièrement ou partiellement dans un évidement de la paroi (13), et qui présente au moins un capteur de température (8) près de la surface (23).

15. Dispositif selon la revendication 14, **caractérisé par le fait que** l'ouverture de réception (22) est réalisée en forme de décrochement, en vue de recevoir la saillie (24) réalisée en conséquence, à la saillie (24) étant associé au moins un élément chauffant (14).

16. Dispositif selon la revendication 14 ou 15, **caractérisé par le fait que** la saillie (24) est prévue au moins partiellement avec une isolation (25) à l'endroit de la paroi (13).

17. Procédé pour contrôler l'état, en particulier l'état de santé, de mammifères, en particulier d'animaux de rente d'élevage qui sucent à une tétine (1), **caractérisé par le fait qu'**au moins un capteur de température (8.1, 8.2) placé dans la tétine (1) ou son environnement est au moins partiellement échauffé.

18. Procédé selon la revendication 17, **caractérisé par le fait qu'**est déterminée la température de la tétine (1).

19. Procédé selon la revendication 17 ou 18, **caractérisé par le fait que** la température de la tétine est maintenue ou régulée, par échauffement, proche à la température du corps du mammifère.

20. Procédé selon la revendication 19, **caractérisé par le fait que**, en cas d'un grand écart de la température de la tétine de la température du corps du mammifère au-delà d'une valeur de seuil, la température de la tétine est portée à une moindre différence de température par rapport à la température mesurée du corps de l'animal.
